Europäisches Patentamt

European Patent Office

Office européen des brevets

(19)

(11) Numéro de publication : **0 469 943 A1**

## (12) DEMANDE DE BREVET EUROPEEN

(21) Numéro de dépôt : 91401850.2

(51) Int. Cl.⁵ : **G05B 19/19**

(22) Date de dépôt : 04.07.91

(30) Priorité : 02.08.90 FR 9009885

(43) Date de publication de la demande :
05.02.92 Bulletin 92/06

(84) Etats contractants désignés :
AT BE CH DE ES GB IT LI NL SE

(71) Demandeur : NUM S.A.
21, Avenue du Maréchal Foch
F-95101 Argenteuil (FR)

(72) Inventeur : **Boucher, Patrick**
**25, rue Peclet**
**F-75015 Paris (FR)**
Inventeur : **Dumur, Didier**
**3, résidence Guillaume de Voisin, Chevry**
**F-91190 Gif sur Yvette (FR)**
Inventeur : **Bergeon, Michel**
**9, Place de Picardie**
**F-95740 Frepillon (FR)**

(74) Mandataire : **de Saint-Palais, Arnaud Marie et al**
**CABINET MOUTARD 35, Avenue Victor Hugo**
**F-78960 Voisins le Bretonneux (FR)**

(54) **Procédé et dispositif de commande prédictive applicable à une machine-outil à commande numérique.**

(57) Le procédé selon l'invention comprend une succession de cycles d'élaboration des ordres de commande du processus commandé (1), chaque cycle comprenant la prise en compte du comportement futur de la trajectoire de ralliement de la variable de sortie, l'estimation des valeurs futures (SF) de la variable de sortie grâce à un modèle de prédiction (3), de manière à obtenir une trajectoire réelle prédictive, l'élaboration d'une séquence finie de signaux de commande en fonction de l'écart trajectoire de ralliement-trajectoire réelle prédictive, et l'application de la première valeur des signaux de commande de ladite séquence sur l'entrée de commande du processus commandé (1).
L'invention s'applique notamment aux machines-outils à commande numérique.

EP 0 469 943 A1

FIG.1

La présente invention concerne un procédé et un dispositif de commande prédictive utilisable notamment, mais non exclusivement, dans les machines-outils à commande numérique.

D'une manière générale, on sait que dans une machine-outil à commande numérique, les déplacements de l'outil et/ou de la pièce à usiner sont commandés par des dispositifs d'asservissement en fonction de valeurs de consigne affichées par l'utilisateur ou même déterminées par un programme.

Il s'avère que dans ce type d'application, l'usage de régulateurs classiques, par exemple de type proportionnel-intégral (PI) ou proportionnel intégral et dérivé, ne permet pas d'obtenir des performances élevées.

Ceci est notamment dû au fait que, d'une façon très compréhensible, cette technique proscrit tout dépassement (qui conduirait à une détérioration des pièces) et que, par ailleurs, l'inertie des pièces en mouvement est relativement importante (sensibilité aux accélérations).

Il s'ensuit que pour supprimer tout risque de dépassement, il est nécessaire d'admettre une erreur de traînage importante, ce qui limite d'autant les performances du système.

L'invention a plus particulièrement pour but de supprimer cet inconvénient.

Pour parvenir à ce résultat, elle se base sur le fait que, dans ce type d'application :

– les variations que doivent subir au cours du temps les variables de sortie du processus commandé (trajectoire de ralliement de la sortie) sont connues ;

– on dispose d'un modèle mathématique de représentation du processus commandé qui permet d'effectuer des prédictions du comportement du processus, sur un horizon de prédiction fini, en fonction des valeurs présentes et antérieures de ses variables d'entrée et de sortie.

Compte tenu de ces particularités, le procédé de commande selon l'invention consiste à utiliser au moins un correcteur prédictif externe apte à effectuer une succession de cycles d'élaboration des ordres de commande du processus commandé, chaque cycle comportant :

– la prise en compte du comportement futur de la trajectoire de ralliement de la variable de sortie sur un horizon fini ;

– l'estimation des valeurs futures de la variable de sortie grâce audit modèle sur un horizon (période) de prédiction fini (obtention d'une trajectoire réelle prédictive) ;

– l'élaboration d'une séquence finie de signaux de commande en fonction de l'écart entre la trajectoire de ralliement, éventuellement filtrée par un modèle de poursuite, et la trajectoire réelle prédictive, cette élaboration s'effectuant par minimisation d'un critère quadratique ;

– l'application de la première valeur des signaux de commande de ladite séquence sur l'entrée de commande du processus commandé.

Ce procédé convient d'une façon particulièrement remarquable à des applications pour lesquelles il est nécessaire de commander deux variables d'un même processus commandé (par exemple une machine-outil) l'une de ces variables étant dite externe (par exemple la position) tandis que l'autre est dite interne (par exemple la vitesse).

Dans ce cas, il fait intervenir deux correcteurs prédictifs montés en cascade, à savoir :

– un correcteur prédictif externe CPE qui reçoit les valeurs de consigne $W_{ext}$ de la variable externe qui constituent la trajectoire de ralliement externe, ainsi que les valeurs mesurées de la variable externe $Y_{ext}$, ce correcteur CPE élaborant une trajectoire de ralliement sur un horizon fini dit de commande externe, obtenue par minimisation d'un critère quadratique qui prend en compte de façon pondérée le signal ainsi généré et l'écart entre la trajectoire de ralliement filtrée ou non filtrée par un modèle de poursuite et la trajectoire prédictive de la grandeur externe $Y_e$ sur un intervalle fini de temps, et

– un correcteur prédictif interne CPI qui reçoit des informations issues du correcteur prédictif externe, appelées trajectoire de référence, ainsi que les valeurs mesurées ou calculées de la variable interne $Y_{int}$, ce correcteur prédictif interne CPI élaborant une séquence finie de signaux de commande obtenue par minimisation d'un second critère quadratique de performance qui prend en compte de façon pondérée cette séquence finie de signaux de commande $U_I$ et l'écart entre la trajectoire issue du correcteur CPE, filtrée ou non filtrée par un modèle de poursuite et la trajectoire prédictive de la variable interne $Y_{int}$ sur un intervalle fini de temps, la première valeur des signaux de commande ainsi obtenue étant appliquée sur l'entrée de commande du processus à réguler.

Bien entendu, l'invention concerne un dispositif pour la mise en oeuvre du procédé précédemment défini et dont un mode d'exécution sera décrit ci-après, à titre d'exemple non limitatif, avec référence aux dessins annexés dans lesquels :

La figure 1 est un schéma de principe d'un correcteur prédictif du type de ceux utilisés conformément au procédé selon l'invention ;

La figure 2 est un diagramme illustrant le principe de fonctionnement du correcteur prédictif représenté figure 1 ;

La figure 3 est un schéma de principe d'un dispositif de commande prédictive à structure cascade, d'une machine-outil à commande numérique ;

La figure 4 est un diagramme illustrant le principe de fonctionnement du correcteur prédictif interne utilisé dans le dispositif de la figure 3 en relation avec le schéma de la figure 2 qui correspond au correcteur prédictif externe, de ce même dispositif ;

La figure 5 est un diagramme illustrant la courbe de réponse à un palier d'un dispositif conforme à l'invention en référence à des courbes de réponses obtenues par des dispositifs classiques.

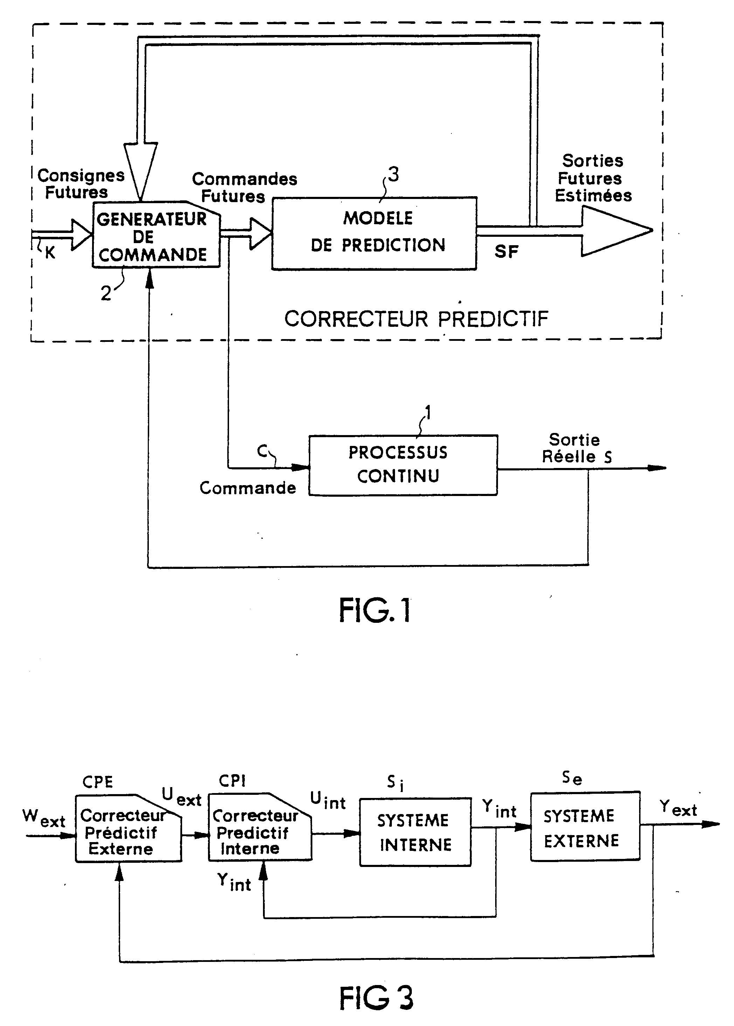

Dans l'exemple représenté sur la figure 1 le processus à contrôler a été représenté par un bloc 1, étant entendu que ce bloc 1 pourrait consister en une machine-outil, la variable commandée étant alors la position de l'outil et/ou celle de la pièce à usiner.

Ce processus reçoit un signal de commande C élaboré par un générateur de commande 2 et comprend des capteurs délivrant des signaux de sortie S représentatifs de la (ou des) variable(s) commandée(s).

Le générateur de commande 2 élabore le signal de commande C en fonction :

– d'un signal K représentatif des valeurs de consigne aussi bien présentes que futures, qui sont définies, par exemple, par un programme ;

– le signal de sortie S délivré par le processus 1 ; et

– un signal représentatif des sorties futures estimées SF du processus, c'est-à-dire des variations estimées dans le futur des variables commandées.

En fait, le générateur de commande 2 effectue une succession de cycles se répétant périodiquement, chaque cycle comprenant l'élaboration d'une séquence finie de signaux de commande C s'échelonnant dans le futur à partir de l'instant présent, seule la première valeur de la séquence étant appliquée sur l'entrée du processus 1.

Par contre, tous les signaux engendrés par le générateur de commande sont appliqués à un calculateur 3 qui, pour chacun de ces signaux, détermine les sorties futures estimées SF du processus 1, grâce à un modèle de prédiction.

Les signaux de commande C sont élaborés par minimisation d'un critère quadratique prenant en compte l'écart entre les consignes futures K (trajectoire de ralliement future) et les sorties futures estimées FS (trajectoire prédictive $Y_e$).

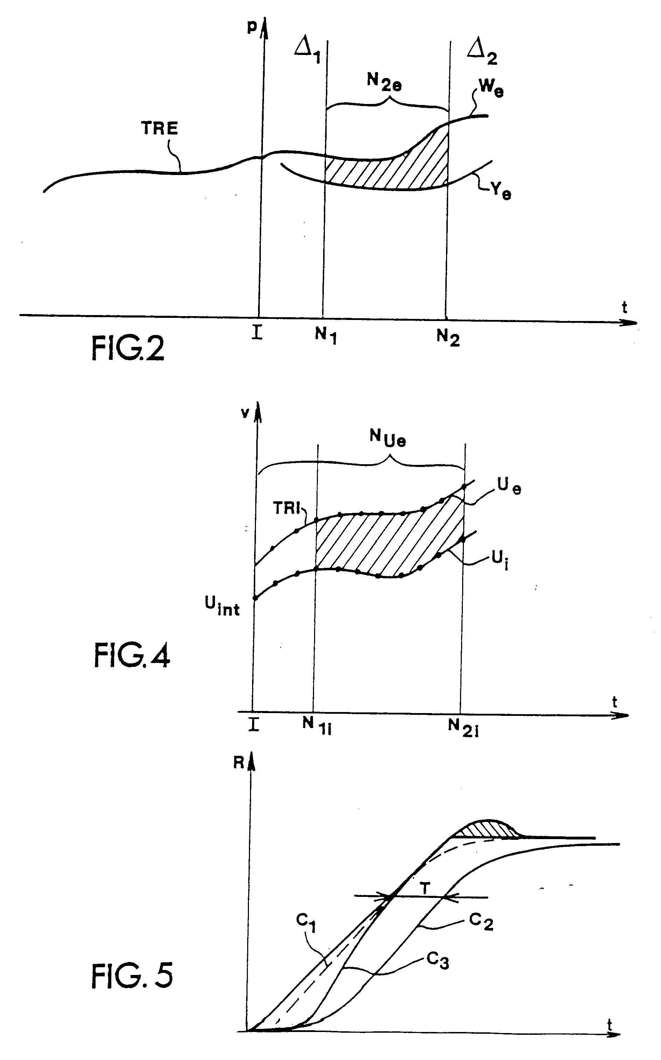

Le diagramme représenté figure 2 montre, à titre indicatif, la trajectoire de ralliement $W_e$ de la variable commandée dans un repère de coordonnées dont l'abscisse indique le temps t (passé et avenir) tandis que l'ordonnée qui coupe l'abscisse en un point I représentant l'instant présent, indique la valeur de la variable commandée p.

Ainsi, la partie de trajectoire $W_e$ située à gauche de l'ordonnée $I_p$ correspond aux consignes passées, le point d'intersection I de la trajectoire $W_e$ avec l'ordonnée indique la consigne actuelle, et la partie de trajectoire $W_e$ située à droite correspond aux consignes futures.

Les deux droites $\Delta_1$, $\Delta_2$ parallèles à l'ordonnée définissent les limites inférieures $N_1$ et supérieures $N_2$ de l'horizon prédictif du générateur de commandes 2.

La partie hachurée située entre la trajectoire $W_e$ et la trajectoire $Y_e$ représente l'écart pris en compte par le critère quadratique dont la minimisation permet d'obtenir une succession d'ordres de commande du processus, dont le premier est appliqué au processus dans le cas le plus simple, ou qui servent de trajectoire de ralliement interne (courbe TRI, figure 4) dans le cas d'un dispositif de commande prédictive à structure cascade, tel que celui représenté figure 3.

Comme précédemment mentionné, le dispositif de la figure 3 est destiné aux applications pour lesquelles il est nécessaire de commander deux grandeurs physiques d'un même processus commandé telles que, par exemple, la position et la vitesse, dans le cas d'une machine-outil.

Dans ce cas, le processus commandé est fictivement décomposé en deux sous-systèmes, disposés en série, à savoir : un système interne (ou secondaire $S_i$) rapide et un système externe (ou principal) plus lent $S_e$.

Le système interne $S_i$ est commandé par un premier correcteur prédictif dit correcteur prédictif interne CPI qui reçoit, d'une part, le signal de sortie $Y_{int}$ délivré par le système interne (par exemple représentatif de la vitesse mesurée du moteur d'entraînement de la chaîne cinématique commandant la position de l'outil ou de la pièce à usiner) et, d'autre part, les signaux de commande $U_{ext}$ filtrés ou non par un modèle de poursuite et émis par un deuxième correcteur prédictif dit correcteur prédictif externe.

Le correcteur prédictif externe CPE reçoit, quant à lui, un signal représentatif des valeurs de consigne $W_{ext}$ (par exemple de position) (trajectoire de ralliement $W_e$) et le signal de sortie $Y_{ext}$ délivré par le système externe $S_e$ (par exemple représentatif de la position détectée de l'outil ou de la pièce à usiner).

Selon un processus analogue à celui décrit en regard de la figure 1, à partir de la connaissance d'une trajectoire de ralliement $W_e$ et de l'élaboration d'une prédiction de la variable externe de sortie $Y_e$ sur un horizon de prédiction $N_{2e}$, le correcteur prédictif externe génère des signaux de commande externes $U_e$ sur un horizon de commande $N_{Ue}$.

Ces signaux de commande $U_e$, qui constituent la trajectoire de ralliement TRI du correcteur prédictif interne CPI, peuvent être issus de la minimisation d'un critère quadratique $J_{ext}$ qui prend en compte, de façon pondérée, les signaux $U_e$ et l'écart entre la trajectoire de ralliement $W_e$ et de la grandeur externe estimée de sortie $Y_e$ sur l'intervalle glissant $[N_{1e} ; N_{2e}]$.

Ce critère peut être avantageusement de la forme :

$$J_{ext} = \sum_{j=N1e}^{N2e} (W_e(t+j) - Y_e(t+j))^2 + \lambda_{ext} \sum_{j=1}^{NUe} DU_e(t+j-1)^2$$

$N_{1e}$       étant le minimum de prédiction de la sortie du système externe,
$N_{2e}$       étant le maximum de prédiction de la sortie du système externe,
$N_{Ue}$       étant l'horizon de commande au-delà duquel la commande est constante,
$\lambda_{ext}$       est une pondération portée sur les variations de commande future,
$D_{Ue}(t)$       est une variation de commande à l'instant t.

Le vecteur de commande externe optimale $DU_{eopt}$ dont les composantes constituent les $N_{Ue}$ variations de commande future prend la forme :

$$DU_{eopt} = (G_e^T . G_e + \lambda_{ext} . 1N_{UE})^{-1} . G_e^T . (W_e - P_e)$$

où
$G_e^T$       est la transposée de la matrice $G_e$
$G_e$       est la matrice caractérisant le système externe,
$W_e$       est le vecteur constitué des $N_{2e}$ points futurs de consigne externe,
$P_e$       est le vecteur composé des réponses libres du système,
$1N_{Ue}$       est une matrice unité.

On dispose, après cette étape de calcul, de $N_{Ue}$ commandes externes, au-delà desquelles les commandes futures sont maintenues constantes, soit :

$$U_e(t) = U_e(t-1) + DU_{eopt}(t)$$

$$\dots\dots\dots\dots\dots\dots\dots\dots\dots\dots$$

$$U_e(t+N_{Ue}-1) = U_e(t+N_{Ue}-2) + DU_{eopt}(t+N_{Ue}-1)$$

$$U_e(t+n) = U_e(t+N_{Ue}-1)$$

$$\text{avec } N_{Ue} < n < N2i$$

$N_{2i}$       étant l'horizon de prédiction de la boucle interne.

Comme précédemment mentionné, les signaux délivrés par le correcteur prédictif externe servent de trajectoire de ralliement TRI au correcteur prédictif interne CPI et qui élabore le signal de commande appliqué au processus commandé.

Ce correcteur prédictif interne effectue le calcul sur un horizon de commande interne $N_{Ui}$, du signal de commande $U_i$ au moyen d'un algorithme de calcul effectuant la minimisation d'un second critère quadratique $J_{int}$ qui prend en compte, de façon pondérée, les variations de commande interne et l'écart entre la sortie du correcteur prédictif externe et la sortie estimée du système interne sur un intervalle $[N_{1i} ; N_{2i}]$.

$$J_{int} = \sum_{j=N1i}^{N2i} (Y_{int}(t+j) - U_e(t+j))^2 + \lambda_{int} \sum_{j=1}^{NUi} DU_i(t+j-1)^2$$

où
$N_{1i}$       minimum de prédiction de la sortie du système interne,
$N_{2i}$       maximum de prédiction de la sortie du système interne,

$N_{Ui}$     horizon de commande interne,

$\lambda_{int}$     facteur de pondération de la commande interne.

Le vecteur de commande interne optimale dont les composantes constituent les $N_{Ui}$ variations de commande future peut s'écrire sous la forme matricielle suivante :

$$DU_{iopt} = (G_i^T . G_i + \lambda_{int} . 1N_{Ui})^{-1} . G_i^T . (U_e\text{-}P_i)$$

où

$G_i^T$     est la transposée de la matrice $G_i$

$G_i$     matrice caractérisant le système interne,

$P_i$     vecteur composé des réponses libres du système interne,

$U_e$     vecteur de commande générée par le correcteur prédictif externe.

Le dispositif précédemment décrit effectue une succession de cycles comprenant chacun la séquence suivante :

1.E Acquisition d'une mesure de la sortie externe $Y_e$ à l'instant "t" présent

2.E Actualisation du vecteur $W_e(t)$ constitué des $N_{2e}\text{-}N_{1e}$ points de consignes futures du système externe, disponibles au temps "t"

3.E Construction du vecteur $Y_e$ constitué des $N_{2e}\text{-}N_{1e}$ prédictions de la sortie du système externe à partir des mesures connues à l'instant présent et passé

4.E Calcul du vecteur $U_e$ constitué des $N_{2i}$ commandes externes servant de nouvelle trajectoire de référence au système interne

5.E Maintien de cette trajectoire pendant la période d'échantillonnage "Te" de la boucle externe

6.I Actualisation de la sortie du système interne à l'instant "t" présent

7.I Construction du vecteur $Y_{int}$ des prédictions de la sortie du système interne

8.I Calcul du vecteur des commandes internes futures $U_{int}$

9.I Application de la première composante de ce vecteur $U_{int}$ pendant une période "Ti" de la boucle interne

10.I m itération de la sous-séquence (de 6.I à 9.I), m étant le plus petit facteur de multiplicité entre les périodes Te et Ti

11.E Réactualisation du temps ("t" est augmenté de Te) et démarrage d'un nouveau cycle.

Avantageusement, dans le cas où il s'applique à la commande d'une machine-outil et où la variable de sortie externe consiste en une position tandis que la variable de sortie interne consiste en une vitesse :

– la trajectoire de ralliement $W_e$ définit une succession de consignes de position,

– la trajectoire de ralliement $U_{ext}$ élaborée par correcteur prédictif externe définit une succession de consignes de vitesse (cf. figure 3),

– le signal de commande appliqué par le correcteur prédictif interne au système interne correspond à un ordre de couple de maintien d'accélération-décélération à l'instant présent.

La figure 5 montre la courbe de réponse $C_1$ à un palier d'un dispositif de commande selon l'invention en comparaison avec une courbe de réponse $C_2$ à traînage T élevé d'un dispositif classique, et avec une courbe de réponse $C_3$ plus serrée mais effectuant un dépassement inadmissible pour une machine-outil (partie hachurée).

Bien entendu, l'invention ne se limite pas au mode d'exécution précédemment décrit.

Ainsi, le critère quadratique utilisé par le correcteur externe, en vue d'élaborer la trajectoire de ralliement $U_{ext}$ utilisée par le correcteur prédictif CPI pourrait être de la forme :

$$J_{ext} = \sum_{j=N_{1e}}^{N_{2e}} (W_e \text{ ref } (t+j) - Y_e (t+j))^2 + \lambda_{ext} \sum_{j=1}^{N_{Ue}} DU_e (t+j) - DU_e \text{ ref } (t+j))^2$$

expression dans laquelle :

$D_{Ue}$ ref (t)     est une variation de la commande de référence de poursuite à l'instant (t) qui provoquerait une variation de la sortie d'un modèle de référence de poursuite de la grandeur externe $W_e$ ref,

$W_e$ ref     est la trajectoire donnée par un modèle de référence de poursuite de la sortie externe $W_e$.

Les expressions $D_{Ue}$, $N_{Ue}$, $N_{1e}$, $N_{2e}$, $\lambda_{ext}$, étant les mêmes que précédemment.

De même, le correcteur prédictif interne pourrait utiliser un critère quadratique de la forme :

$$J_{int} = \sum_{j=N_{1i}}^{N_{2i}} (Y_{int}(t+j) - U_e \, ref(t+j))^2 + \lambda_{int} \sum_{j=1}^{N_{Ui}} D_{Ui}(t+j) - D_{Ui} \, ref \, (t+j))^2$$

expression dans laquelle :

$U_e \, ref(t)$ est une trajectoire de référence obtenue par filtrage de la trajectoire issue du correcteur CPE par un modèle de poursuite, cette trajectoire constituant une consigne prédictive de la boucle interne,

$D_{Ui} \, ref(t)$ est une variation de la commande de référence de poursuite qui provoquerait une variation de la sortie $U_e \, ref(t)$ du modèle de référence de poursuite dont l'entrée est la grandeur $U_2(t)$ délivrée par le correcteur CPE.

Les expressions $N_{Ui}$, $N_{I1}$, $N_{I2}$, $\lambda_{int}$, étant, étant les mêmes que précédemment.

## Revendications

1. Procédé de commande prédictive d'un processus présentant au moins une variable de sortie qui doit subir, au cours du temps, des variations conformes à une trajectoire de ralliement déterminée à l'avance, ce procédé faisant intervenir un modèle de représentation qui permet d'effectuer des prédictions du comportement du processus sur un horizon de prédiction fini, en fonction des valeurs présentes et antérieures des variables d'entrée et de sortie,

   caractérisé en ce qu'il consiste à utiliser au moins un correcteur prédictif apte à effectuer une succession de cycles d'élaboration des ordres de commande du processus commandé, chaque cycle comportant :
   - la prise en compte du comportement futur de la trajectoire de ralliement de la variable de sortie sur un horizon fini,
   - l'estimation des valeurs futures de la variable de sortie, grâce audit modèle sur un horizon de prédiction fini, de manière à obtenir une trajectoire réelle prédictive,
   - l'élaboration d'une séquence finie de signaux de commande en fonction de l'écart entre la trajectoire de ralliement, éventuellement filtré par un modèle de poursuite, et de la trajectoire réelle prédictive, cette élaboration s'effectuant par minimisation d'un critère quadratique,
   - l'application de la première valeur des signaux de commande de ladite séquence sur l'entrée de commande du processus commandé.

2. Procédé selon la revendication 1, pour la commande de deux variables d'un même processus commandé, l'une étant dite externe, tandis que l'autre est une variable interne du processus,

   caractérisé en ce qu'il fait intervenir deux correcteurs prédictifs montés en cascade, à savoir :
   - un correcteur prédictif externe (CPE) qui reçoit les valeurs de consigne ($W_{ext}$) de la variable externe qui constituent la trajectoire de ralliement externe, ainsi que les valeurs mesurées de la variable externe ($Y_{ext}$), ce correcteur (CPE) élaborant une trajectoire de ralliement sur un horizon fini dit de commande externe, obtenue par minimisation d'un critère quadratique qui prend en compte de façon pondérée le signal ainsi généré et l'écart entre la trajectoire de ralliement filtrée ou non filtrée par un modèle de poursuite et la trajectoire prédictive de la grandeur externe $Y_e$ sur un intervalle fini de temps, et
   - un correcteur prédictif interne (CPI) qui reçoit des informations issues du correcteur prédictif externe, appelées trajectoire de référence, ainsi que les valeurs mesurées ou calculées de la variable interne ($Y_{int}$), ce correcteur prédictif interne (CPI) élaborant une séquence finie de signaux de commande obtenue par minimisation d'un second critère quadratique de performance qui prend en compte de façon pondérée cette séquence finie de signaux de commande ($U_i$) et l'écart entre la trajectoire issue du correcteur (CPE), filtrée ou non filtrée par un modèle de poursuite et la trajectoire prédictive de la variable interne ($Y_{int}$) sur un intervalle fini de temps, la première valeur des signaux de commande ainsi obtenue étant appliquée sur l'entrée de commande du processus à réguler.

3. Procédé selon la revendication 2,

   caractérisé en ce que le critère quadratique utilisé par le correcteur prédictif externe (CPE) en vue d'élaborer la trajectoire de ralliement ($U_{ext}$) du correcteur prédictif interne (CPI) est de la forme :

$$J_{ext} = \sum_{j=N1e}^{N2e} (W_e(t+j) - Y_e(t+j))^2 + \lambda_{ext} \sum_{j=1}^{NUe} DU_e(t+j-1)^2$$

$N_{1e}$     étant le minimum de prédiction de la sortie du système externe,

$N_{2e}$     étant le maximum de prédiction de la sortie du système externe,

$N_{Ue}$     étant l'horizon de commande au-delà duquel la commande est constante,

$\lambda_{ext}$     est une pondération portée sur les variations de commande future,

$D_{Ue}$     est une variation de commande à l'instant t.

4.    Procédé selon la revendication 2,
caractérisé en ce que le critère quadratique utilisé par le correcteur prédictif externe (CPE) en vue d'élaborer la trajectoire de ralliement ($U_{ext}$) utilisée par le correcteur prédictif interne (CPI) est de la forme :

$$J_{ext} = \sum_{j=N1e}^{N2e} (W_e\,ref(t+j) - Y_e(t+j))^2 + \lambda_{ext} \sum_{j=1}^{NUe} DU_e(t+j) - DU_e\,ref(t+j))^2$$

expression dans laquelle :

$D_{Ue}\,ref(t)$     est une variation de la commande de référence de poursuite à l'instant (t) qui provoquerait une variation de la sortie d'un modèle de référence de poursuite de la grandeur externe $W_e\,ref$

$W_e\,ref$     est la trajectoire donnée par un modèle de référence de poursuite de la sortie externe $W_e$,

$N_{1e}$     est le minimum de prédiction de la sortie du système externe,

$N_{2e}$     est le maximum de prédiction de la sortie du système externe,

$N_{Ue}$     est l'horizon de commande au-delà duquel la commande est constante,

$\lambda_{ext}$     est une pondération portée sur les variations de commande future,

$D_{Ue}$     est une variation de commande à l'instant t.

5.    Procédé selon l'une des revendications 2 à 4,
caractérisé en ce que le critère quadratique utilisé par le correcteur prédictif interne pour élaborer le signal de commande appliqué au processus est de la forme :

$$J_{int} = \sum_{j=N1i}^{N2i} (Y_{int}(t+j) - U_e(t+j))^2 + \lambda_{int} \sum_{j=1}^{NUi} DU_i(t+j-1)^2$$

équation dans laquelle :

$N_{1i}$     est le minimum de prédiction de la sortie du système interne,

$N_{2i}$     est le maximum de prédiction de la sortie du système interne,

$N_{Ui}$     est l'horizon de commande interne,

$\lambda_{int}$     est un facteur de pondération de la commande interne.

6.    Procédé selon l'une des revendications 2 à 4,
caractérisé en ce que le critère quadratique utilisé par le correcteur prédictif interne pour élaborer le signal de commande appliqué au processus est de la forme :

$$J_{int} = \sum_{j=N_{1i}}^{N_{2i}} (Y_{int}(t+j) - U_e \, ref(t+j))^2 + \lambda_{int} \sum_{j=1}^{N_{Ui}} DU_i(t+j) - DU_i \, ref(t+j))^2$$

expression dans laquelle :

$U_e$ ref(t)    est une trajectoire de référence obtenue par filtrage de la trajectoire issue du correcteur (CPE) par un modèle de poursuite, cette trajectoire constituant une consigne prédictive de la boucle interne,

$D_{Ui}$ ref(t)    est une variation de la commande de référence de poursuite qui provoquerait une variation de la sortie $U_e$ref(t) du modèle de référence de poursuite dont l'entrée est la grandeur $U_e$(t) délivrée par le correcteur (CPE),

$N_{1I}$    est le minimum de prédiction de la sortie du système interne,

$N_{2I}$    est le maximum de prédiction de la sortie du système interne,

$N_{Ui}$    est l'horizon de commande interne, et

$\lambda_{int}$    est un facteur de pondération de la commande interne.

7.  Procédé selon l'une des revendications 2 à 6,
    caractérisé en ce qu'il comprend une succession de cycles comportant chacun la séquence suivante :
    1.E Acquisition d'une mesure de la sortie externe $Y_e$ à l'instant "t" présent
    2.E Actualisation du vecteur $W_e$(t) constitué des $N_{2e}$-$N_{1e}$ points de consignes futures du système externe, disponibles au temps "t"
    3.E Construction du vecteur $Y_e$ constitué des $N_{2e}$-$N_{1e}$ prédictions de la sortie du système externe à partir des mesures connues à l'instant présent et passé
    4.E Calcul du vecteur $U_e$ constitué des $N_{2i}$ commandes externes servant de nouvelle trajectoire de référence au système interne
    5.E Maintien de cette trajectoire pendant la période d'échantillonnage "Te" de la boucle externe
    6.I Actualisation de la sortie du système interne à l'instant "t" présent
    7.I Construction du vecteur $Y_{int}$ des prédictions de la sortie du système interne
    8.I Calcul du vecteur des commandes internes futures $U_{int}$
    9.I Application de la première composante de ce vecteur $U_{int}$ pendant une période "Ti" de la boucle interne
    10.I m itération de la sous-séquence (de 6.I à 9.I), m étant le plus petit facteur de multiplicité entre les périodes Te et Ti
    11.E Réactualisation du temps ("t" est augmenté de Te) et démarrage d'un nouveau cycle.

8.  Dispositif pour la mise en oeuvre du procédé selon l'une des revendications précédentes,
    caractérisé en ce qu'il comprend au moins un correcteur prédictif comportant un calculateur apte à élaborer grâce à un modèle de représentation, une trajectoire réelle prédictive de la variable de sortie du processus sur un horizon de prédiction fini, en fonction de valeurs présentes et antérieures des variables d'entrée et de sortie du processus, des moyens de programmation permettant d'élaborer une trajectoire de ralliement de la variable de sortie sur un horizon fini, et des moyens permettant d'élaborer une séquence finie de signaux de commande en fonction de l'écart entre la trajectoire de ralliement et de la trajectoire réelle prédictive, et des moyens permettant d'appliquer la première valeur des signaux de commande sur l'entrée de commande du processus commandé.

9.  Dispositif selon la revendication 8, utilisable dans le cas d'un processus présentant deux variables à commander, à savoir : une variable de sortie interne ($Y_{int}$) et une variable de sortie externe ($Y_{ext}$), ce processus étant décomposé en deux sous-systèmes disposés en série, à savoir : un système interne ($S_i$) et un système externe ($S_e$),
    caractérisé en ce qu'il comprend deux correcteurs prédictifs disposés en série, à savoir : un correcteur prédictif externe (CPE) recevant un signal représentatif des valeurs de consigne ($W_{ext}$) (trajectoire de ralliement ($W_e$) ainsi que le signal de sortie ($Y_{ext}$) délivré par le système externe ($S_e$) et élaborant une trajectoire de ralliement ($U_{ext}$) de la variable de sortie interne ($Y_{int}$), en fonction de l'écart entre la trajectoire de ralliement de la variable externe ($Y_{ext}$) et de la trajectoire réelle prédictive de cette variable externe ($Y_{ext}$), et un correcteur prédictif interne (CPI) qui reçoit le signal de sortie ($Y_{int}$) délivré par le système interne ($S_i$) ainsi que des signaux représentatifs de la trajectoire de ralliement de la variable de sortie interne ($Y_{int}$),

ce correcteur prédictif interne effectuant le calcul sur un horizon de commande interne ($N_{Ui}$), du signal de commande ($U_i$) à appliquer au système interne, au moyen d'un algorithme de calcul effectuant la minimisation d'un critère quadratique ($J_{int}$) qui prend en compte, de façon pondérée, l'écart entre la trajectoire de ralliement de la variable de sortie interne ($Y_{int}$) et la trajectoire réelle prédictive de la variable de sortie interne ($Y_{int}$).

**FIG.1**

**FIG 3**

FIG.2

FIG.4

FIG. 5

EP 0 469 943 A1

Office européen
des brevets

**RAPPORT DE RECHERCHE EUROPEENNE**

Numero de la demande

EP 91 40 1850

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-3928547 (KABUSHIKI KAISHA OKUMA TEKKOSHO) * revendications 1-5; figures 1-3, 5, 7 * | 1, 2, 7-9 | G05B19/19 |
| A | | 3-6 | |
| A | WO-A-9003009 (MASSACHUSETTS INSTITUTE OF TECHNOLOGY) * revendications 1, 18; figure 11 * | 1, 8 | |
| A | EP-A-254211 (HITACHI, LTD.) * abrégé; figure 1 * | 1, 8 | |
| A | DE-A-3732220 (SIEMENS AG) * le document en entier * | 1, 8 | |
| A | DD-A-237388 (VEB ELEKTROPROJEKT UND ANLAGENBAU BERLIN) * le document en entier * | 1, 8 | |

|  |  |
|---|---|
| | **DOMAINES TECHNIQUES RECHERCHES (Int. Cl.5)** |
| | B23Q G05B |

Le présent rapport a été établi pour toutes les revendications

| Lieu de la recherche | Date d'achèvement de la recherche | Examinateur |
|---|---|---|
| BERLIN | 25 OCTOBRE 1991 | CUNY, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)